# EUROPÄISCHE PATENTANMELDUNG

(11) **EP 1 533 940 A1**
(43) Veröffentlichungstag der Anmeldung: **25.05.2005**
(21) Anmeldenummer: 03026531.8
(22) Anmeldetag: 18.11.2003
(51) Int. Cl.: H04L 12/24

(54) **Transformation Function eines TMN Systems**

(71) Anmelder: SIEMENS AKTIENGESELLSCHAFT, 80333 München (DE)
(72) Erfinder: Wolf, Christian, 10559 Berlin (DE)

(57) **Zusammenfassung**

Die Transformation Function TF eines TMN Systems, die zur Verbindung von Komponenten mit unterschiedlichen Kommunikationsmechanismen und insbesondere zur Anbindung von Netzelementen NE, die keine standardisierte Network Element Function NEF aufweisen, an das TMN System eingesetzt wird, mit Hilfe eines in einer prädikativen Programmiersprache realisierten Programms durchzuführen.

Vorteilhaft können dadurch Änderungen der Network Element Function NEF ohne erneutes Übersetzen die Transformation Function TF in das TMN System eingefügt werden.

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Physikalisch ist die NEF üblicherweise in einem Netzelement (NE) und die OSF in einem Operations System (OS) angeordnet. Zwischen NE und OS kann ein Data Communication Networks (DCN) zur Übermittlung von Informationen vorgesehen sein. Die Übermittlung folgt den Prinzipien des Transportdienstes, so wie er in den unteren vier Schichten des ISO/OSI Referenzmodells im internationalen Standard X.200 beschrieben ist. Sofern eine TF erforderlich sein sollte, ist sie entweder in ein NE oder ein OS integriert oder als eigenständige Einrichtung zwischen NE und OS angeordnet. Letztere wird auch als Mediation Device (MD) bzw. als Adaptation Device (AD) bezeichnet.

Die einzelnen TMN Funktionen werden in zeitgemäßen TMN Systemen üblicherweise von funktionsspezifischen Programmen bewirkt. Diese Programme werden mit Hilfe von Programmiersprachen beschrieben. Sie werden von Hardware (z.B. Prozessor, i/o Baugruppe) ausgeführt, die in den Einrichtungen vorgesehen ist. Diese Ausführung wird von Standard-Software (z.B. Multitasking bzw. Multithreading Betriebssystem, Datenbanksystem, Windows System) unterstützt.

Die Transformation Function zwischen unterschiedlichen Kommunikationsmechanismen und insbesondere von unterschiedlichen Objektmodellen wird üblicherweise mit Hilfe von Transformationsprogrammen bewirkt. Diese sind mit imperativen Programmiersprachen beschrieben, die zu deren Ausführung mit einem Übersetzer in eine Maschinensprache übertragen werden.

Eine Programmiersprache ist eine Sprache zur Formulierung von Rechenvorschriften, die von einem Computer ausgeführt werden können. Je nach Grad, mit dem die Hardware bei der Programmierung beachtet werden muss, klassifiziert man Programmiersprachen in Maschinensprachen (direkte Programmierung der Hardware), niedere, maschinenorientierte Assemblersprachen (Programmierung der Hardware mit symbolischen Namen) und höhere, problemorientierte Programmiersprachen (sind von der Hardware unabhängig und an den zu bearbeitenden Problemfällen orientiert). Jeder Programmiersprache liegt ein bestimmtes Konzept oder Denkschema zugrunde. Auf Basis dieser Konzepte unterteilt man die höheren Programmiersprachen in unterschiedliche Kategorien wie z.B. imperative (z.B. PASCAL, C, COBOL), objektorientierte (z.B. C++) oder prädikative Programmiersprachen (z.B. PROLOG).

Bei imperativen Programmiersprachen besteht ein Programm aus einer Folge von Befehlen an den Computer. Ein gegebenes Problem dadurch wird gelöst, dass der Programmierer eine Folge von Anweisungen zusammenstellt, durch deren Ausführung man die Lösung erhält.

Bei prädikativen Programmiersprachen wird Programmierung als Beweisen in einem System von Tatsachen und Schlussfolgerungen aufgefasst. Ein gegebenes Problem wird dadurch gelöst, dass der Programmierer sein eigenes Wissen über ein Problem als Menge von Fakten (= gültige Prädikate) und Regeln (d.h., wie man aus Fakten neue Fakten gewinnt) vorgibt, und der Computer versucht, mit Hilfe dieses Wissens selbständig eines Lösung des Problems zu finden, z.B. zu gestellten Fragen (Queries) eigenständig ermittelt, ob sie als richtig oder falsch zu beantworten sind. Ein Beispiel für eine prädikative Programmiersprache ist PROLOG (= "PROgramming in LOGic").

Als Beispiel für das Verständnis einer prädikativen Programmiersprache sei das Problem von Verwandtschaftsbeziehungen betrachtet. Das Grundwissen sind die Beziehungen "verheiratet" und "istKind". Grundwissen wird in PROLOG als eine Menge von Fakten dargestellt. Fakten sind immer von der Form "name (W₁, W₂, ...Wₙ)", wobei "name" ein beliebiger, mit einem Kleinbuchstaben beginnender Bezeichner ist und die Wₓ irgendwelche Werte sind. Fakten sind im Beispiel der Verwandtschaftsbeziehungen
"verheiratet(Mann,Frau)"
"istKind(Kind,Mutter)"

Man kann einem PROLOG System auf diese Weise folgende Fakten mitteilen (jedes einzelne Faktum ist durch einen Punkt abgeschlossen):
istKind(heinz,emma).
istKind (emma, elfriede) .
istKind(hugo,elfriede).

verheiratet (anton, emma) .
verheiratet(wilhelm,elfriede).
verheiratet(hugo,rosa).

Nach Mitteilung dieser Fakten kann man dem PROLOG System nun Fragen stellen, und das PROLOG System gibt die Lösungen aus, die es findet (Fragen sind mit einem Fragezeichen und Ausgaben des Systems mit einem Stern gekennzeichnet):
?istKind(emma,elfriede).
*yes

?verheiratet(anton,rosa).
*no

Man kann in den Fragen für bestimmte Werte auch Variable einsetzen. In diesem Fall gibt das PROLOG System alle Werte für die Variablen aus, für die es eine Lösung findet. Will man z.B. wissen, mit wem "hugo" verheiratet ist, und welche Kinder "elfriede" hat, so kann man folgende Fragen stellen (Variablen beginnen immer mit einem Großbuchstaben):
?verheiratet(hugo,Frau).
*Frau = rosa
?istKind(Kind,elfriede).
*Kind = emma
*Kind = hugo

Es ist auch möglich, mehrere Fragen zu einer zu verknüpfen. In diesem Fall gibt das PROLOG System nur solche Werte für die Variablen aus, für die alle Fragen gleichzeitig erfüllt sind (logisch gesehen kann man also mehrere Fragen durch und verknüpfen). Wenn man den Vater von "heinz" herausfinden will, so muss man fragen, welche Mutter er hat und mit wem sie verheiratet ist (mehrere Fragen werden durch Kommata getrennt):
?istKind(heinz,Mutter),
   verheiratet(Vater,Mutter).
*Mutter = emma, Vater = anton

Kommt eine Variable in mehreren Teilfragen vor, so bedeutet dies, dass bei einer Lösung auch der Wert an allen Stellen der gleiche sein muss. Wenn man nun öfters den Vater eines Kindes wissen will, so ist es sehr umständlich, immer die beiden obigen Teilfragen zu stellen. Aus diesem Grund kann man in PROLOG neben dem Grundwissen in Form von Fakten auch Regeln aufschreiben. Zur Abfrage des Vaters kann man dem PROLOG System eine Regel "istVater" mitteilen (Regeln werden durch einen senkrechten Strich gekennzeichnet):
|istVater(Vater,Kind) :-
   istKind(Kind,Mutter),
   verheiratet (Vater,Mutter).

Diese Regel besagt: "Vater" ist der Vater von "Kind", wenn (Zeichen :-) "Kind" das Kind von "Mutter" und "Mutter" mit "Vater" verheiratet ist (die Problematik der Stiefväter ist hier nicht berücksichtigt). Nachdem das PROLOG System diese Regel erhalten hat, kann man den Vater von "hugo" oder die Kinder von "wilhelm" durch folgende Fragen herausfinden:
?istVater(Vater,hugo).
*Vater = wilhelm

?istVater(wilhelm,Kind).
*Kind = emma
*Kind = hugo

Entsprechend kann man Regeln für Geschwister (Kinder sind Geschwister, wenn sie die gleiche Mutter haben) oder Großväter (Vater des Vaters) definieren:
|geschwister (Kind1;Kind2) :-
   istKind(Kindl,Mutter),
   istKind(Kind2,Mutter).
|grossvater (Opa,Enkel) :-
   istVater(Opa,Vater),
   istVater(Vater,Enkel).

Fakten und Regeln sind die wesentlichen Grundelemente von PROLOG. Um auch komplizierte Daten mit einfachen Bezeichnern verarbeiten zu können, besteht in PROLOG die Möglichkeit, Strukturen von mehreren Daten mit einem Bezeichner zu versehen. Man kann z.B. beide Elternteile zu einer Einheit mit der Bezeichnung "eltern" zusammenfassen:
"eltern(wilhelm,elfriede)",
"eltern(anton,emma)".

In allen PROLOG Systemen sind Regeln zum Rechnen mit Zahlen definiert, so dass man die Sprache auch für arithmetische Anwendungen benutzen kann. Bisher gibt es jedoch keine einheitliche Definition der Sprache PROLOG, so dass die Fakten und Regeln je nach PROLOG System unterschiedlich eingegeben werden können.

Die Lösung einer gegebenen Anfrage findet das PROLOG System durch ein Backtracking-Verfahren, d.h. es werden alle Möglichkeiten solange ausprobiert, bis eine Lösung gefunden wird oder keine weiteren Alternativen mehr existieren.

Höhere Programmiersprachen können wegen ihrer fehlenden Maschinenorientierung nicht unmittelbar von der Hardware ausgeführt werden, sondern müssen entweder zuvor mit Hilfe von Übersetzern in niedere Programmiersprachen übertragen oder mit Hilfe von zwischengeschalteten Interpretern ausgeführt werden, von denen die Rechenvorschriften der höheren Programmiersprache während der Ausführung des Programms in Maschinensprache übertragen werden. Programme, die in einer höheren imperativen Programmiersprache beschrieben sind, werden üblicherweise mit Hilfe von Übersetzern (Compiler) in eine Maschinensprache übertragen, die dann von der Hardware ausgeführt wird. Zur Ausführung von Programmen, die in einer prädikativen Programmiersprache beschrieben sind, werden hauptsächlich Interpreter oder inkrementelle Übersetzer eingesetzt.

Ein Übersetzer liest das Quellprogramm (source code) ein, analysiert es und gibt das übersetzte Zielprogramm (object code) aus. Bei jeder Änderung an dem Quellprogramm ist erneute Übersetzung des gesamten Quellprogramms sowie ein Neustart des Zielprogramms erforderlich, um die Änderung wirksam werden zu lassen.

Ein Interpreter ist ein Programm, welches ein Programm einer anderen Programmiersprache nach den notwendigen syntaktischen Überprüfungen sofort ausführt. Im Gegensatz zu einem Übersetzer muss das Quellprogramm nicht erst in eine andere Programmiersprache übersetzt werden, sondern der Interpreter analysiert nacheinander jede Anweisung und Deklaration des Quellprogramms und führt diese unmittelbar aus. Interpreter werden vor allem für Programmiersprachen mit einer Ausrichtung zum Dialogbetrieb eingesetzt, wie z.B. APL, BASIC, LISP oder PROLOG.

Ein inkrementeller Übersetzer hat das Quellprogramm und das Zielprogramm gleichzeitig im Hauptspeicher. Der Programmierer kann sein Quellprogramm im Dialogbetrieb verändern, und der inkrementelle Übersetzer ändert gleichzeitig das Zielprogramm so, dass die beiden Programme die gleiche Bedeutung (Semantik) besitzen. Kleine Änderungen im Quellprogramm führen dabei meist auch nur zu kleinen Änderungen im Zielprogramm.

Nach dem bislang Ausgeführten wird klar, dass die Umsetzung dieser Architektur in konkrete Lösungen und insbesondere die Realisierung der Transformation Function eine komplexe technische Problemstellung darstellt.

Es ist Aufgabe der Erfindung, den bisherigen Stand der Technik zu verstehen und durch Angabe von zumindest einer neuen Lehre zu bereichern.

Es ist eine feststehende Tatsache, dass Transformation Functions für TMN Systeme - wie eingangs beschrieben - mit Hilfe von imperativen Programmiersprachen realisiert werden. Dies liegt nach Ansicht der Erfindung zum einen daran, dass die immanente Logik der Transformation Function:
**IF**
   Receive (Information x im Format y des Objektmodells z )
**THEN**
   Transform (Format y=>y') and
   Send (Information x im Format y' des Objektmodells z')
mit dem Konzept der imperativen Sprachen deckungsgleich ist. Zudem werden imperative beschriebene Programme vor ihrer Ausführung mit einem Übersetzer in eine Maschinensprache übertragen, womit der zusätzliche Vorteil verbunden ist, dass die derart realisierten Mediation Devices hinsichtlich Speicherbedarf und Laufzeitverhalten besonders effizient sind.

Eine Realisierung mit Hilfe einer anderen Programmiersprache und insbesondere einer prädikativen Programmiersprache wurde bislang nicht in Erwägung gezogen. Dies liegt nach Ansicht der Erfindung u.a. daran, dass prädikative Programmiersprachen infolge von deren Grundidee einer Wissensverarbeitung fest mit Künstlichen Intelligenz Systemen und Expertensystemen beziehungsweise - da es relativ einfach ist, in ihnen einen Parser (syntaktische Analyse) für kontextsensitive Grammatiken zu schreiben - mit Systemen zur Verarbeitung von umgangssprachlichen Sätzen in Verbindung gebracht werden und für andersartige Problemfelder - insbesondere im Umfeld von klassischen IF-THEN Situationen - als nicht passend angesehen werden, vor allem wenn diese mit hohen Anforderungen an die Systemperformance gekoppelt sind wie bei der Transformation Function der Fall.

Die in den Patentansprüchen beschriebene Erfindung bricht mit diesen Glaubensgrundsätzen, indem entgegen der allgemeinen Lehre vorgeschlagen wird, die Transformation Function mit Hilfe einer prädikativen Programmiersprache zu realisieren.

Beispielsweise könnten die Management Informationen einer MIB des NE als Fakten eines prädikativ beschriebenen Programms modelliert werden und Zugriffe auf die Management Informationen mit Hilfe von prädikativ formulierten Anfragen realisiert werden, die jeweils auf Basis der vorhandenen Fakten beantwortet werden. Als Antwort liefert dann das System diejenigen Management Informationen, für die alle Fakten und Regeln des Systems wahr sind.

Damit sind eine Vielzahl von Vorteilen verbunden:
- Für die Einbindung eines neuen Netzelementes in ein TMN System ist in den meisten Fällen die Entwicklung einer netzelementspezifischen TF zur Objektmodellübersetzung zwischen der proprietären MIB des NE und dem standardisierten Objektmodell des TMN Systems erforderlich. Jede TF muss nach der Entwicklung getestet werden, wobei jede Fehlerkorrektur eine aufwändige Vollübersetzung des gesamten Quellcodes bedingt. Dies für im Ergebnis zu vergleichsweise langen Testzyklen, die infolge der Vielzahl von unterschiedlichen TF den Betrieb eines TMN Systems in Summe stark belasten. Dieser Nachteil wird bei Einsatz von prädikativen Programmiersprachen erheblich reduziert, weil diese interpretiert werden. Der Vorteil von Interpretern liegt darin, dass einzelne Anweisungen oder Deklarationen im Quellprogramm geändert werden können und das Programm mit diesen Änderungen direkt ausführbar ist. Meist kann man auch Werte von Variablen während der Programmausführung abfragen und abändern. Dies erleichtert das Testen von Programmen wesentlich, weil die langen Testzyklen durch den Wegfall der aufwändigen Vollübersetzung des gesamten Quellcodes erheblich verkürzt werden.
- Diese Testzyklen entstehen grundsätzlich bei jeder Änderung in einer MIB eines NE von neuem, da die imperativen Programmiersprachen infolge der aufwändigen Vollübersetzung des gesamten Quellcodes sehr unflexibel gegenüber Änderungen der MIB sind. Somit vervielfacht sich der zeitliche Vorteil, der durch die flexible Handhabung einer prädikativen Programmiersprache erzielt wird.
- Besonders vorteilhaft ist eine Anwendung der Erfindung in TMN Systemen mit vielen unterschiedlichen Netzelementen mit jeweils vergleichsweise kleiner MIB. In diesen Systemen akkumulieren sich die Vorteile, die mit den flexibleren prädikativen Programmiersprachen verbunden sind, besonders stark, während Einschränkungen in der Systemperformance, die sich durch die Interpretation der prädikativen Programme ergeben, infolge der kleinen MIB's in vertretbaren Grenzen halten.
- Eine TF für neue Netzelemente kann in einer prädikativen Programmiersprache besonders elegant beschrieben werden, so dass sich durch reduzierte Programmerstellungszeiten zeitliche und wirtschaftliche Vorteile realisieren lassen.
- Änderungen in der MIB des NE können ohne großen Aufwand nachgezogen werden, indem das prädikative Programm entsprechend geändert wird. Dies gilt auch für umfangreiche und komplexe Änderungen der MIB, weil die Interpreter prädikativer Programme eine große Bandbreite unterschiedlicher Fakten und Regeln verarbeiten können. Insbesondere können neue Management Informationen und Änderungen der Parameteranzahl bestehender Management Informationen in einem prädikativen Programm dargestellt werden.

Weitere vorteilhafte Ausgestaltungen der Erfindung ergeben sich aus den unter- oder nebengeordneten Ansprüchen.

Eine Ausgestaltung wird von der Überlegung getragen, dass die Systemperformance eines prädikativen Programms signifikant gesteigert werden kann, wenn die Management Informationen aus der MIB eines NE nicht als Fakten in der Datenhaltung des prädikativen Systems hinterlegt, sondern mit einem imperativ programmierten Datenhaltungssystem verwaltet werden. Mit einem derartigen hybriden Gesamtsystems aus imperativen und prädikativen Programmanteilen wird eine Systemperformance erreicht, die nahe an die einer rein imperativ programmierten TF heranreicht. Ein besonders schöner Vorteil dieser Ausgestaltung liegt darin, dass die Systemperformance in Hinblick auf Speicherbedarf und Laufzeitverhalten so deutlich verbessert wird, dass die Vorgaben, die an rein imperativ programmierte TF gestellt werden, auch bei großen MIB nicht verletzt werden.

Dieser Ausgestaltung liegt die Erkenntnis zu Grunde, dass Interpreter zwar grundsätzlich eine längere Rechenzeit bei der Ausführung von Programmen bedingen, weil z.B. bei jeder Zuweisung die Adressen der verwendeten Variablen mit Hilfe der Bezeichner gesucht werden müssen, während bei Verwendung eines Übersetzers die Adressen einmalig während der Übersetzung berechnet werden. Dies ist allerdings nicht die Hauptursache für die mit zunehmender Größe einer MIB immer stärker abfallende Systemperformance einer rein prädikativen programmierten TF. Diese liegt vielmehr in der Datenbasis des prädikativen Systems. Dies sei am Beispiel eines PROLOG System näher erläutert: Die in der MIB eines NE enthaltenen Management Informationen müssen, um das PROLOG System in die Lage zu versetzen, Anfragen betreffend dieser MIB zu beantworten, vom NE abgerufenen und in der Datenbasis des PROLOG Systems als Fakten abgelegt werden. Das Hinzufügen von Informationen als PROLOG Fakten wird zur Laufzeit eines PROLOG Interpreters üblicherweise durch eine so genannte ASSERT Klausel realisiert. Die relevanten Teile der MIB des NEs werden auf diese Weise komplett in die Prolog Datenbasis überführt und stehen dann der weiteren Abarbeitung zur Verfügung. Die ASSERT Klausel ist eine sehr mächtige, aber auch langsame Operation, die nur in Verbindung mit Interpretern verwendet werden kann. Das Ablegen der MIB in der PROLOG Datenbasis ist mit Hilfe der ASSERT Klausel sehr speicherintensiv, der Zugriff darauf sehr langsam. Dies ist nach Erkenntnis der Erfindung die Hauptursache für das oben beschriebene Absinken der Systemperformance einer rein prädikativ programmierten TF.

Gemäß einer weiteren Ausgestaltung der Erfindung wird der Sprachumfang der prädikativen Programmiersprache um ein spezielles Build-In Prädikat erweitert, das als zusätzliches Prädikat im Interpreter der prädikativen Programmiersprache vorgesehen wird. Die Verarbeitung dieses Prädikates durch den Interpreter umfasst eine in einer imperativen Programmiersprache, wie z.B. C++, implementierte Methode, die einen performanten Zugriff auf die MIB ermöglicht ohne dabei die Semantik von Prolog zu verletzen. Mit der Einführung des neuen Built-In Prädikates ist es sehr einfach möglich, die Prologdatenbasis nach jenen Management Informationen zu durchsuchen, die vom NE abgerufen werden müssen, um die Protokollumsetzung bzw. Objektmodellumsetzung durchführen zu können. Außerdem wird die Form der Prologregeln für die Objektmodellumsetzung vereinfacht. Besonders elegant ist dieser Vorteil, wenn die Management Informationen hierarchisch gegliedert ist (wie z.B. bei einer SNMP MIB) und die imperative Methode darauf abgestimmt wird.

Weiterhin ist vorgesehen, die MIB in der TF in einer Datenhaltung zu speichern, die in einer imperativen Programmiersprache wie z.B. C++ programmiert ist. Damit ist der Vorteil verbunden, dass die Management Informationen der MIB nicht mehr als Prolog Fakten abgelegt werden. Die Ausführung von ASSERT Operation kann somit entfallen und der Speicherbedarf für die MIB des NE auf das Niveau herkömmlich programmierter TF reduziert werden.

Die Erfindung wird im Folgenden anhand von weiteren Ausführungsbeispielen, die auch in den Figuren dargestellt sind, erläutert. Dabei zeigt:
- Figur 1: eine beispielhafte Realisierung der Erfindung in einem exemplarischen TMN System, umfassend die TMN Funktionen WSF, OSF, TF und NEF, die in physikalischen Einrichtungen WS, OS, MD/AD und NE angeordnet sind
- Figur 2: eine beispielhafte Einbettung von zwei Management Informationen aus der MIB eines Produktes cityLight eines Herstellers XXXX in den Global Naming Tree

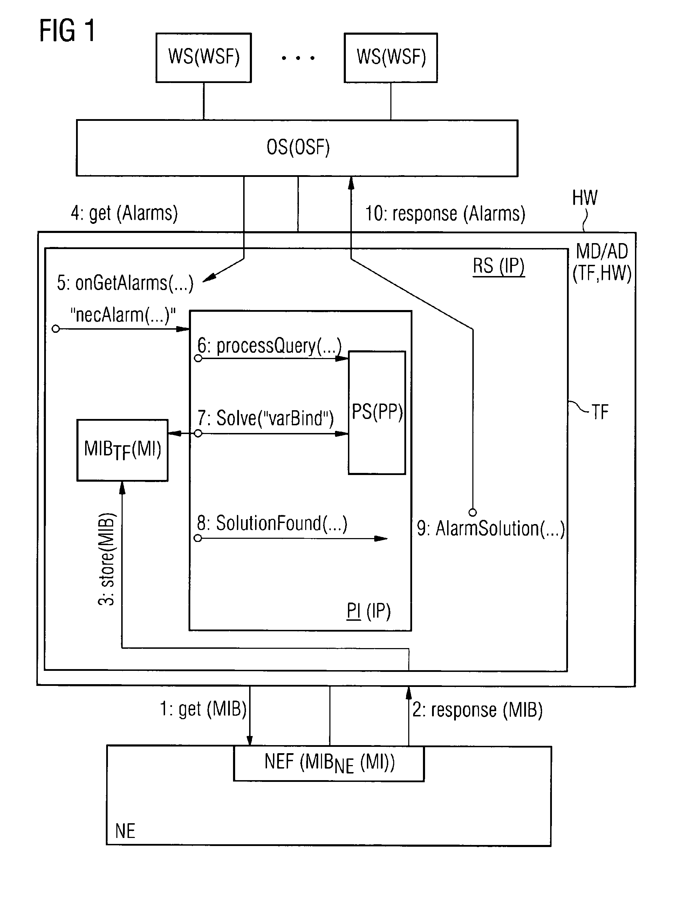

In Figur 1 ist ein typisches TMN System der eingangs beschriebenen Art aufgezeigt. Es umfasst die Funktionsblöcke Operations Systems Function OSF, die in einer Einrichtung Operations System OS angeordnet ist, Workstation Function WSF, die in Einrichtungen Workstation WS angeordnet sind und Transformation Function TF, die in einer separaten Einrichtung MD/AD angeordnet ist, die als Mediation Device MD bzw. als Adaption Device ausgebildet sein kann. Die Einrichtung umfasst des weitern Hardware HW zur Durchführung von Programmen, die als Runtime Systeme RS, Prolog Interpreter PI und als Prolog Skript PS ausgebildet sind. Die Programme RS und PI sind in einer imperativen Programmiersprache IP wie z.B. C++ beschrieben, das Programm PS in einer prädikativen Programmiersprache PP wie z.B. PROLOG. Weiterhin ist in Figur 1 ein beispielhaftes Ablaufdiagramm integriert, das im Weiteren ausgeführt wird.

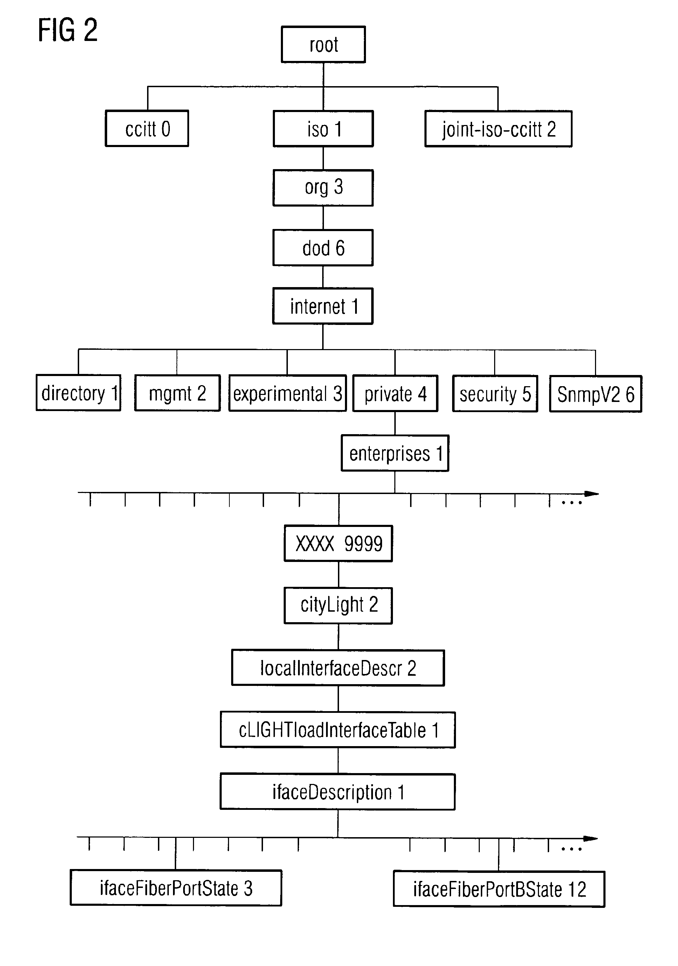

In Figur 2 ist eine beispielhafte Einbettung von zwei Management Informationen ifaceFiberPortState und ifaceFiberPortBState aus der SNMP (Simple Network Management Protocol) MIB eines Produktes cityLight eines Herstellers XXXX in den Global Naming Tree des ISO/CCITT beschrieben. Dieser Baum wurde von der International Organization for Standardization (ISO) und von dem International Telegraph and Telephone Consultative Committee (CCITT) - der heutigen International Telephone Union for Telecommunication (ITU-T) - festgelegt mit dem Ziel, für jede Management Information einen weltweit eindeutigen Object Identifier zu vergeben. Jeder Knoten des Baums wird durch ein Label gekennzeichnet, das sich aus einem kurzen Text und einer Zahl zusammensetzt. Der obere Teil {root} ← {iso 1} ← {org 3} ← {dod 6} ← {internet 1} ← {private 4} ← {enterprises 1} des Baumes ist international genormt, der untere firmenspezifisch {XXXX 9999} ← {cityLigth 2} ← {localInterfaceDescr 2} ← {cLIGHTleadInterfaceTable 1} ← {ifaceDescription 1} ← {ifaceFiberPortState 3} bzw. ← {ifaceFiberPortBState 12}. Der Object Identifier einer Management Information ist die Sequenz von Zahlen, die den Pfad von der root zu der Information kennzeichnen. Zur besseren Lesbarkeit werden die Zahlen der Sequenz üblicherweise durch einen Punkt getrennt dargestellt. Die Management Information ifaceFiberPortState wird somit durch den Object Identifier 1.3.6.1.4.1.9999.2.2.1.1.3 identifiziert und die Management Information ifaceFiberPortBState durch den Object Identifier 1.3.6.1.4.1.9999.2.2.1.1.12.

Es sei betont, dass die dabei aufgezeigten Ausführungen der Erfindung trotz ihrer teilweise sehr detailgetreuen Darstellung lediglich beispielhafter Natur und nicht einschränkend zu verstehen sind. Dem Fachmann ist klar, dass die Erfindung bei allen denkbaren Netzkonfigurationen, insbesondere anderen Interworking Szenarien funktioniert. Insbesondere kann das Protokoll SNMP durch andere wirkungsgleiche Protokolle und die prädikative Programmiersprache PROLOG durch andere wirkungsgleiche Programmiersprachen ersetzt werden.

Im Folgenden wird ein Ausführungsbeispiel der Erfindung erläutert, bei dem von der Funktion OSF auf die Management Information **ifaceFiberPortState** des NE zugegriffen wird. Zur Abgrenzung wird parallel dazu die Management Information **ifaceFiberPortBState** des NE dargestellt. Die MIB des NE ist gemäß den Regeln des SNMP (Simple Network Management Protokoll) gestaltet ist, die inkompatibel ist mit den Kommunikationsmechanismen der Funktion OSF. Die deshalb für den Zugriff erforderliche Transformation wird von der zwischengeschalteten Funktion TF unter Mitwirkung eines PROLOG Programms (auch Skript genannt) bewirkt.

Grundvoraussetzung für Zugriffe auf eine MIB ist eine Beschreibung der in ihr enthaltenen Management Informationen. Die nachfolgende Beschreibung ist ein beispielhafter Ausschnitt aus einer maschinenlesbaren SNMP Spezifikation der MIB des Netzelements NE der Firma XXXX, aus der man u.a. entnehmen kann, wie auf die Management Informationen **ifaceFiberPortState** und **ifaceFiberPortBState** im Netzelement NE zugegriffen werden kann:

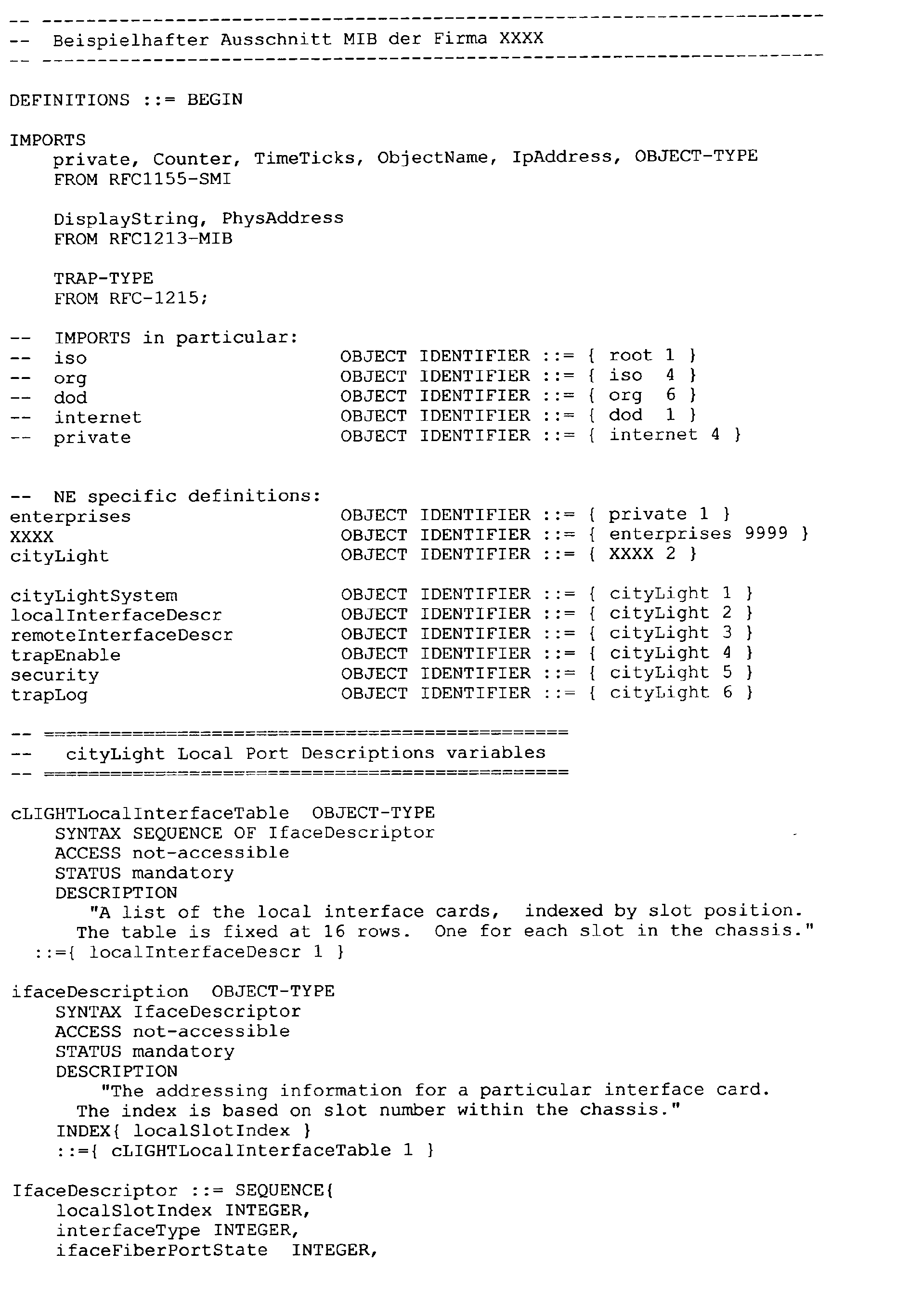

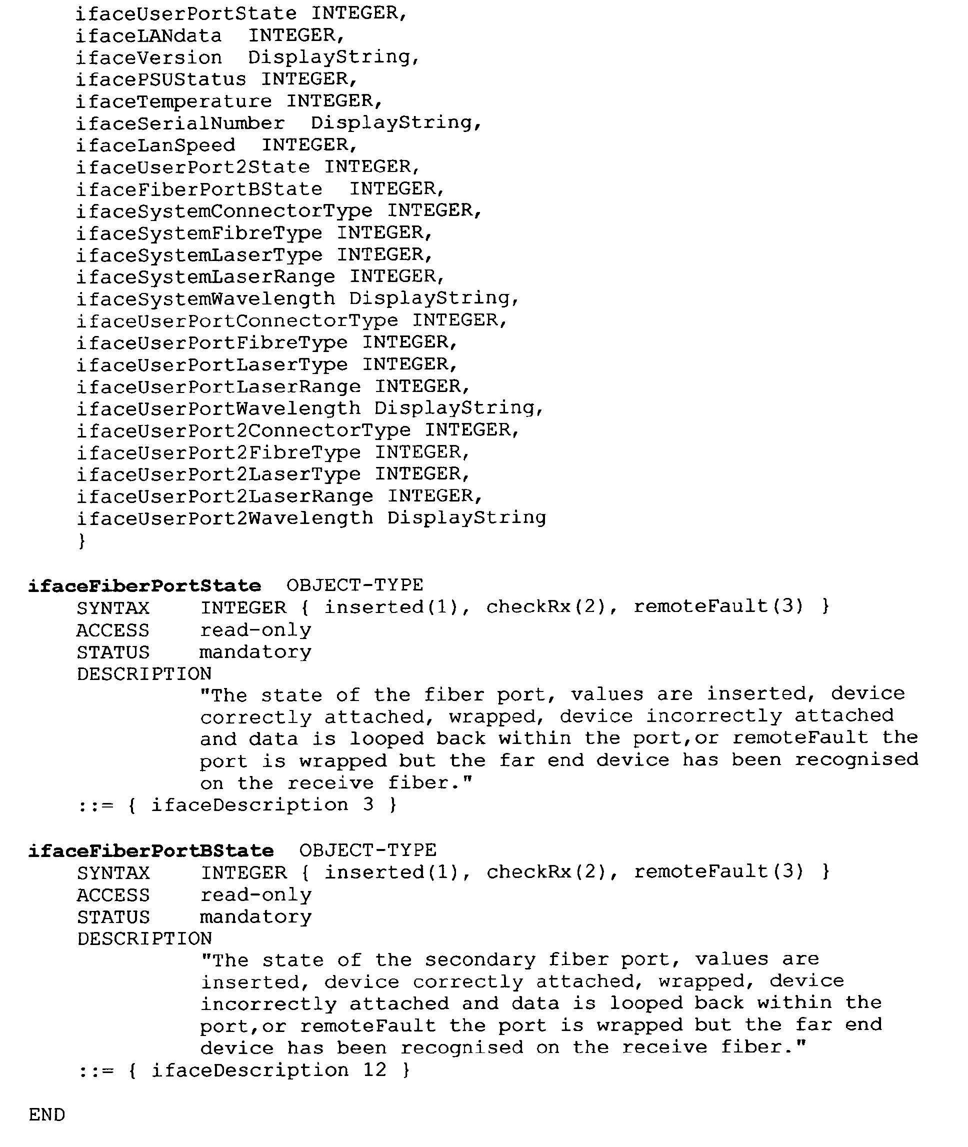

Aus dieser SNMP Spezifikation werden von einem MIB Compiler prädikative Fakten generiert, in denen das Mapping von den symbolischen Namen der Management Informationen auf deren Object Identifier und umgekehrt gespeichert ist. Es folgt ein beispielhafter Output des MIB Compiler, der in der Sprache eines PROLOG Skriptes abgefasst ist und als Input für einen PROLOG Interpreter PI genutzt werden kann:

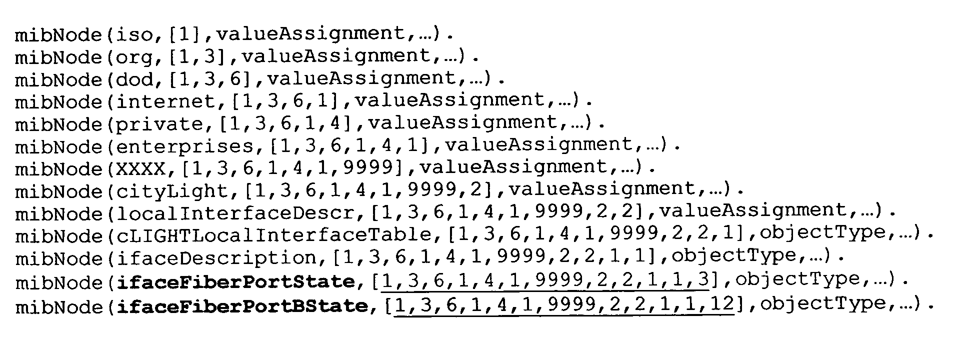

Weiterhin wird für den Zugriff ein in einer prädikativen Programmiersprache PP beschriebenes Programm benötigt, mit dessen Regeln definiert wird, wie die einzelnen Management Informationen in der MIB des NE gefunden werden können. Es folgt ein beispielhafter Ausschnitt eines in PROLOG beschriebenem Skript PS für die Management Informationen **ifacefiber-PortState** und **ifaceFiberPortBState** mit einer speziellen Embedded Rule "varBind(...)" zum Zugriff auf die Management Informationen der SNMP MIB. Zudem ist eine Regel "necModule (...)" dargestellt, in der weitere Embedded Rules wie z.B. "is" zum Einsatz kommen.

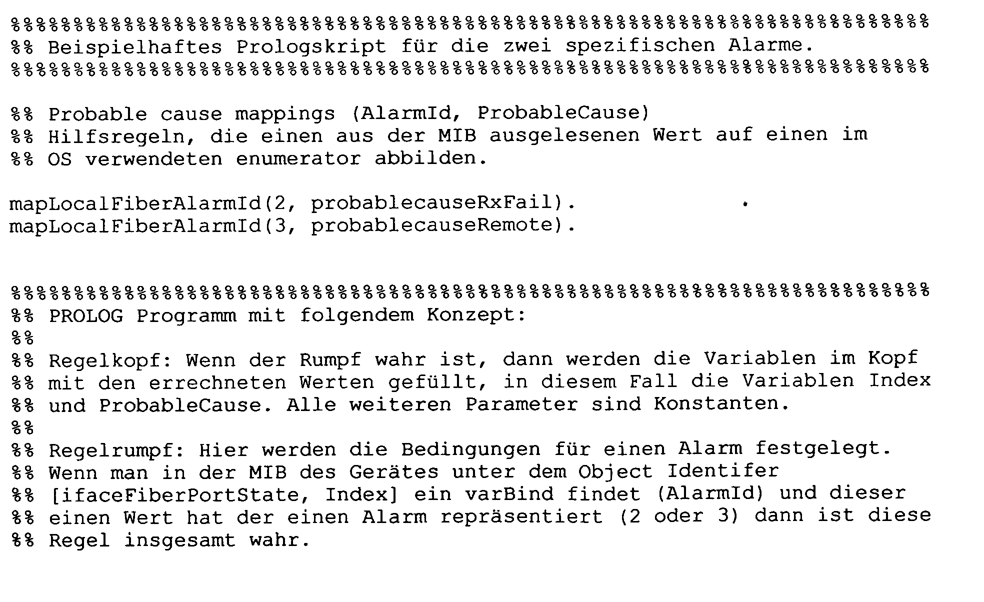

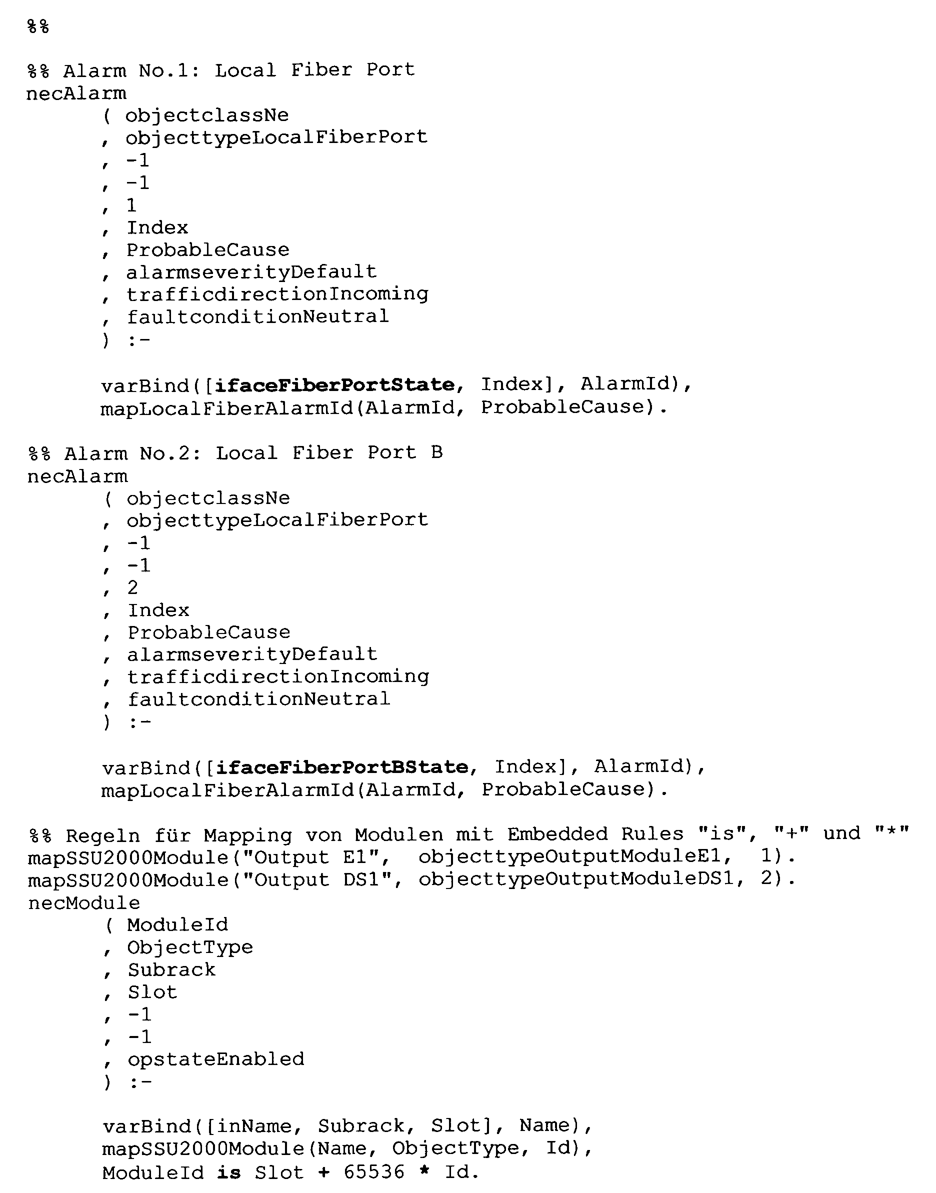

Mit Hilfe dieses PROLOG Skriptes PS sowie der Fakten des MIB Compiler kann nun der Zugriff des OS durch die Funktion TF realisiert werden. Ein Möglichkeit zur Realisierung dieses Zugriff besteht darin, alle Management Informationen aus dem NE abzufragen (siehe Figur 1, dort die Meldungen 1:get(MIB) und 2:response(MIB)) und dem PROLOG Interpreter als Fakten zur Verfügung zu stellen. Der Zugriff auf die Management Informationen kann dann von jedem beliebigen PROLOG Interpreter (z.B. dem GNU Interpreter) durch ein Backtracking Verfahren über alle Fakten und Regeln bewirkt werden.

Zur Optimierung der Systemperformance werden die Management Information in der Funktion TF nicht als Fakten, sondern in einer speziell auf schnelle Zugriffe hin optimierten Datenhaltung hinterlegt (siehe Figur 1, 3:store(MIB)). Diese Datenhaltung ist vorzugsweise in einer imperativen Sprache wie C++ programmiert.

Es folgt ein beispielhafter Ausschnitt aus dem Runtime System RS sowie aus dem PROLOG Interpreters PI der Funktion TF, in denen ausgeführt ist, wie in diesem Ausführungsbeispiel eine Anfrage 4:get(Alarms) der Funktion OSF an die Funktion TF über die Schritte 5: onGetAlarms (...) → 6: processQuery (...) → 7 : Solve (...) → 8:SolutionFound (...) → 9:AlarmSolution(...) zu einer Antwort 10:response(Alarms) der Funktion TF an die Funktion OSF führt:

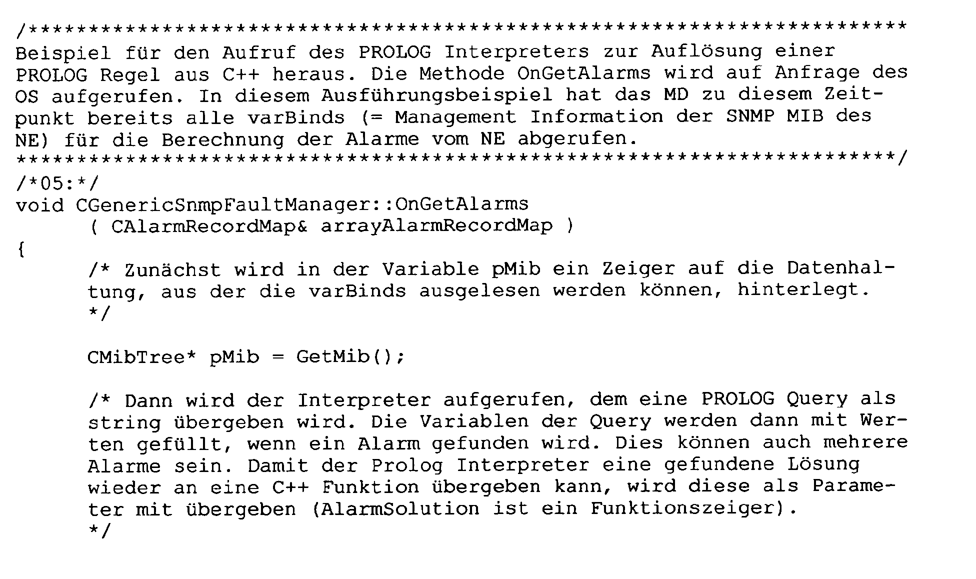

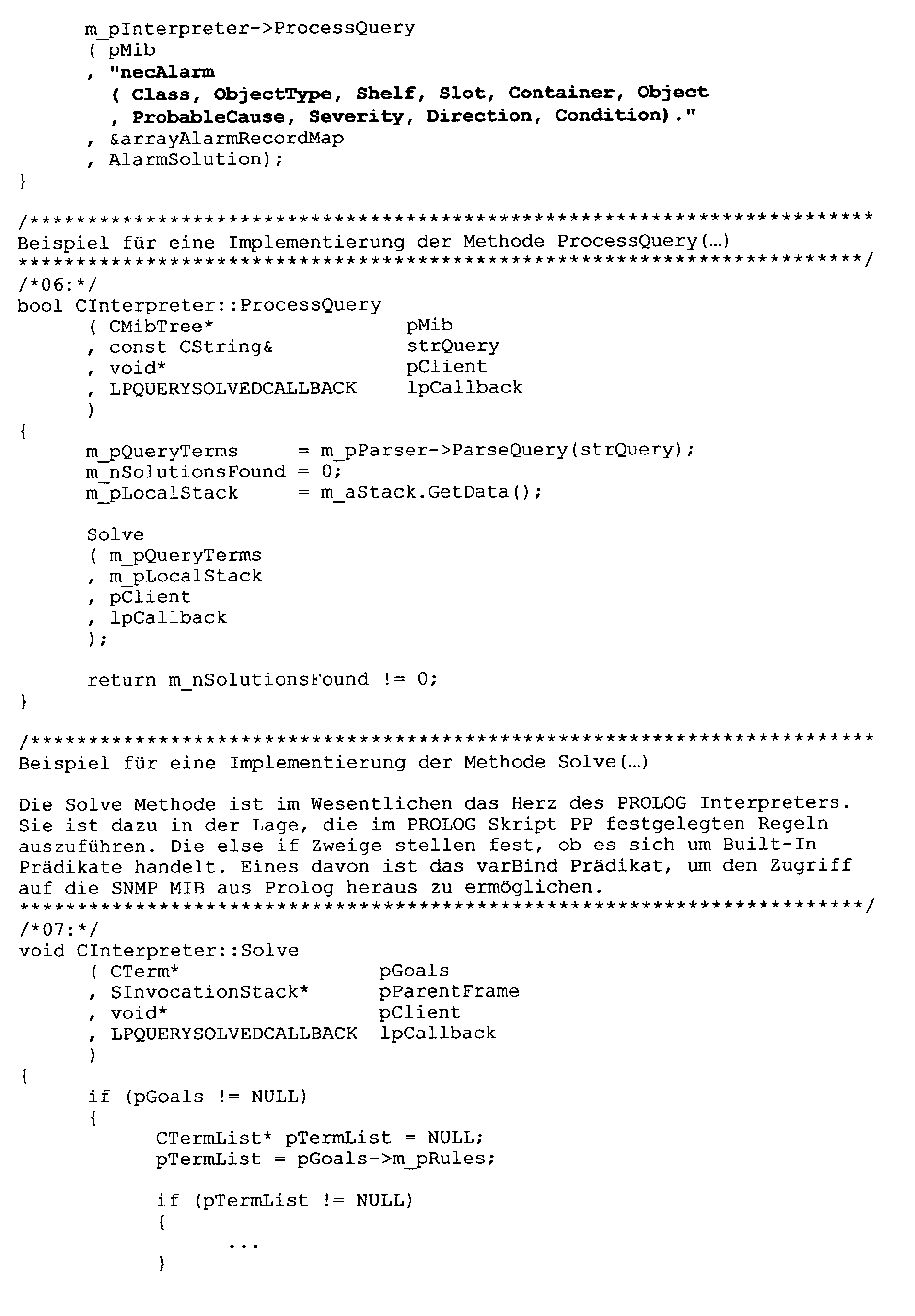

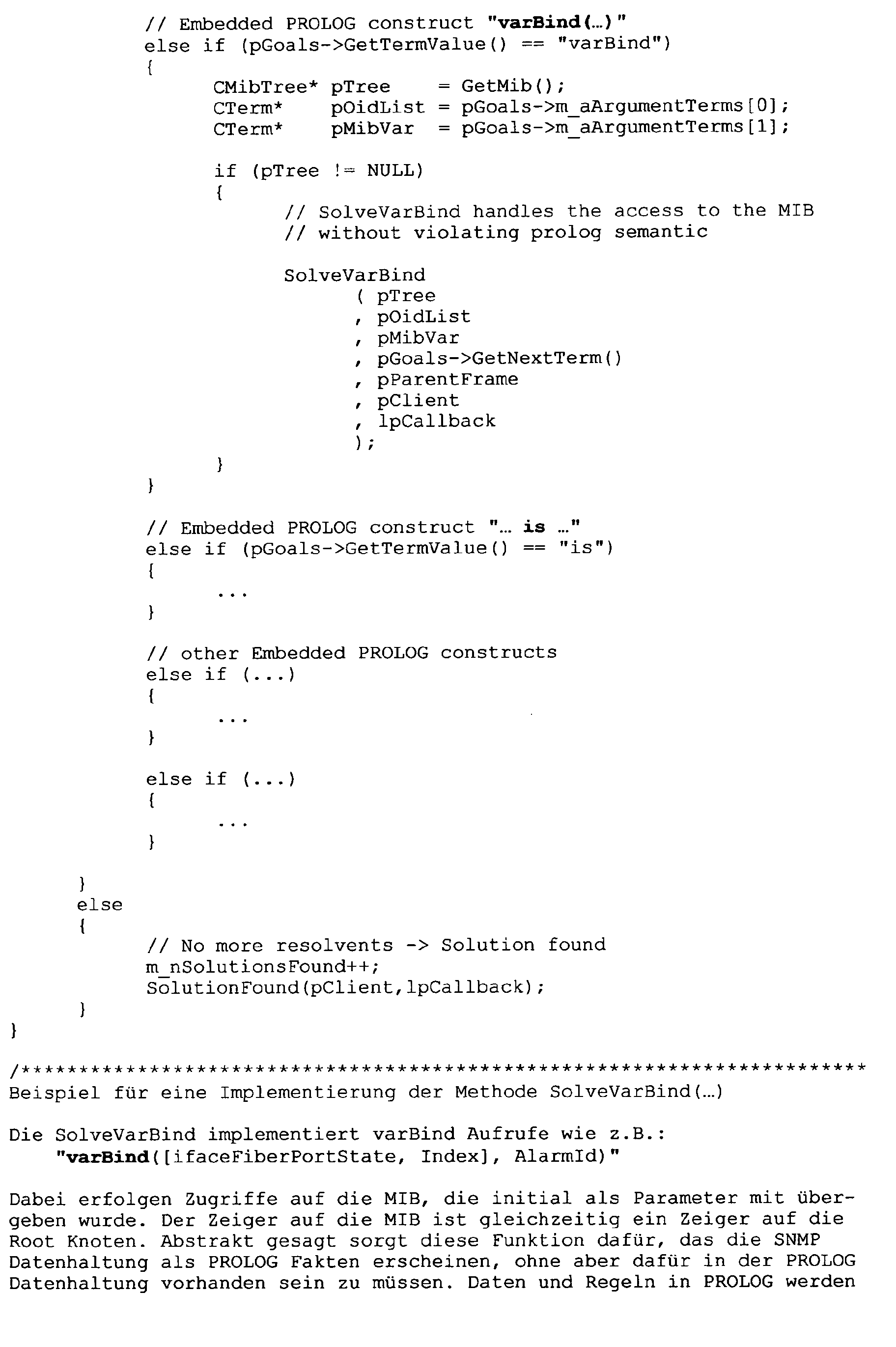

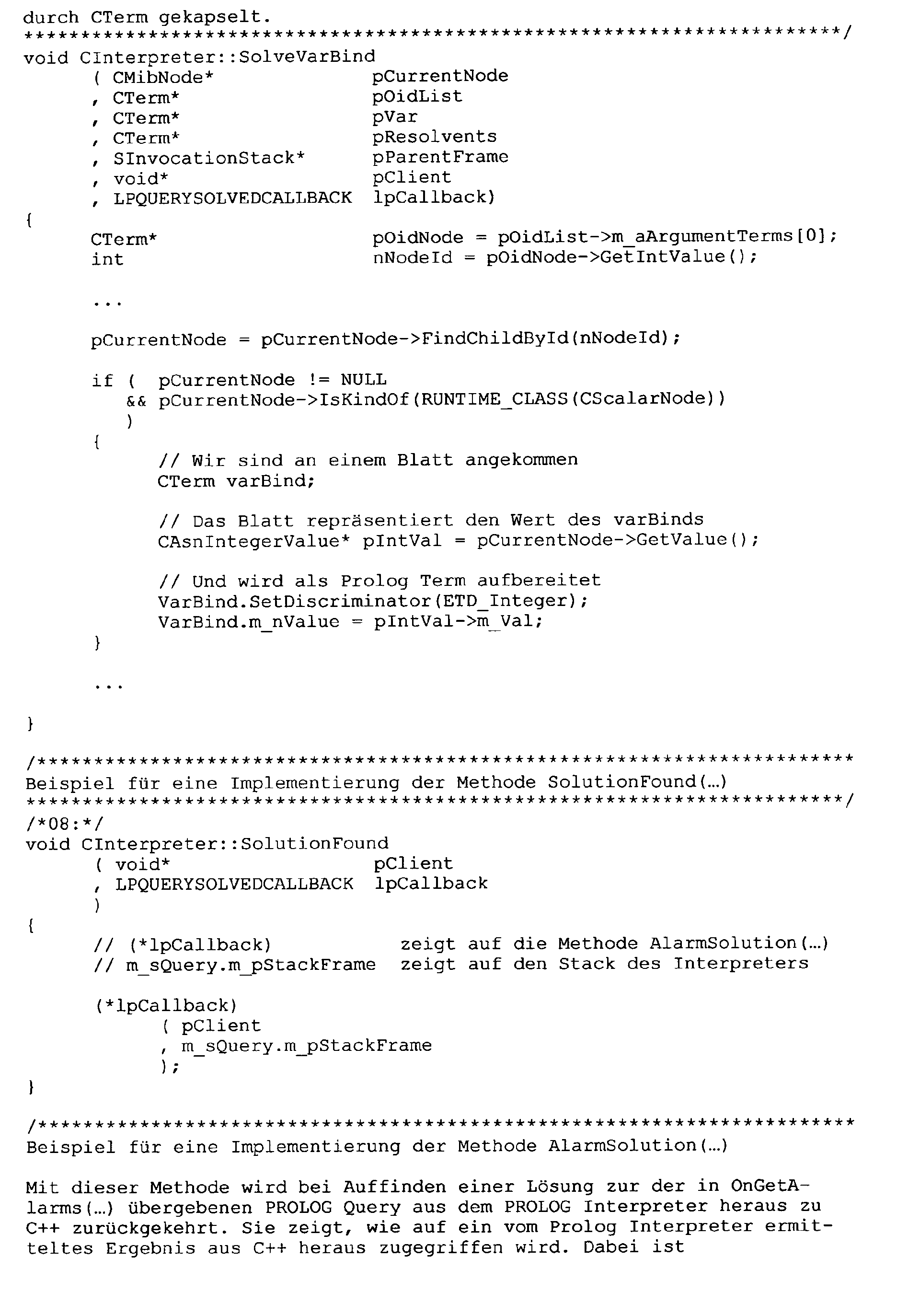

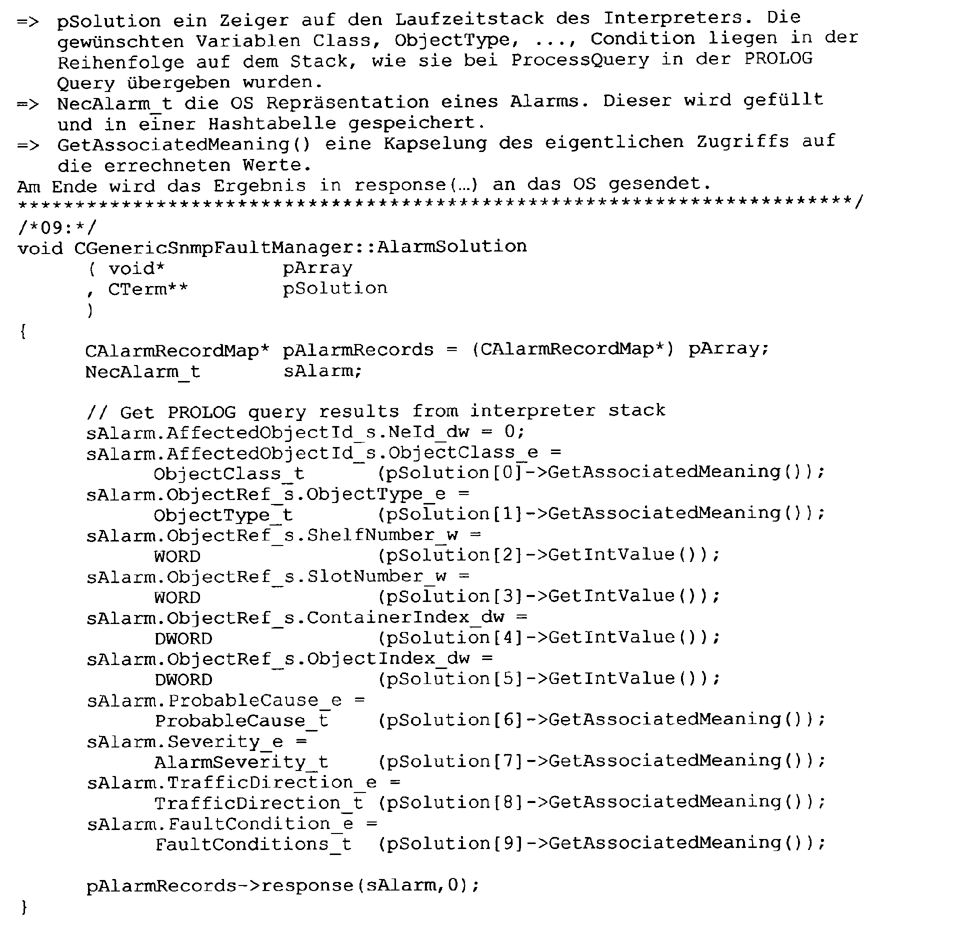

Von der Methode response(...) wird die zugegriffene Management Information **ifaceFiberPortBState** an die Funktion OSF gesendet. Damit ist die Transformation der SNMP MIB für diesen Zugriff abgeschlossen.

Abschließend sei darauf hingewiesen, dass die Beschreibung der für die Erfindung relevanten Komponenten des TMN Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass alle Funktionseinheiten teilweise oder vollständig in Software / Computerprogrammprodukten und/oder über mehrere physikalische Einrichtungen verteilt realisiert werden können.

## Patentansprüche

1. Transformation Function (TF) eines TMN Systems, die mit Hilfe zumindest eines in einer prädikativen Programmiersprache programmierten Programme (PP) realisiert ist.

2. Interpreter (PI) für eine prädikative Programmiersprache, mit zumindest einem Build-In Prädikt (Solve ("varbind")), dessen Verarbeitung eine in einer imparativen Programmiersprache implementierte Methode umfasst, die einen Zugriff auf Management Informationen (MI) einer Management Information Bass (MIB) eines Netzelements (NE) so durchführt, dass die Management Informationen für den Interpreter wie Fakten einer prädikativen Programmiersprache erscheinen.

3. Prädikativ programmiertes Programm (PP), unter dessen Mitwirkung Management Informationen (MI) einer Management Information Base (MIB) eines Netzelements (NE) eines TMN Systems so transformiert werden, dass sie von einem Operations Systems (OS) des TMN Systems verarbeitet werden können.

4. Verwendung eines in einer prädikativen Programmiersprache programmierten Programms (PP) zur Realisierung einer Transformation Function (TF) eines TMN Systems.

5. Verfahren zur Durchführung einer Transformation Function (TF) enes TMN Systems, mit folgenden Schritten:
- Analyse einer Management Information Bass (MIB) mit Hilfe eines in einer prädikativen Programmiersprache programmierten Programms (PP),
- Transformation von Ergebnissen der Analyse mit Hilfe eines in einer beliebigen Programmiersprache programmierten Programmes (IP).

6. Verfahren nach dem vorstehenden Verfahrensanspruch, bei dem die Transformation mit Hilfe eines imperativ programmierten Programms (IP) bewirkt wird.

7. Verfahren nach einem der vorstehenden Verfahrensansprüche, bei dem die Management Information Base vor ihrer Analyse von einem Netzelement (NE) geladen wird.

8. Vorrichtung - insbesondere Mediation Device (MD) oder Adaptation Device (AD) -, umfassend Mittel zur Durchführung der Schritte eines Verfahrens nach einem der vorstehenden Verfahrensansprüche.

9. Vorrichtung nach dem vorstehenden Anspruch, bei der die Mittel als Transformation Function (TF) nach Anspruch 1 und/oder Interpreter (PI) nach Anspruch 2 ausgebildet sind.

10. TMN System, umfassend zumindest eine Transformation Function (TF) nach Anspruch 1 und/oder zumindest einen Interpreter nach Anspruch 2 und/oder zumindest eine Programm nach Anspruch 3 und/oder zumindest eine Vorrichtung nach einem der vorstehenden Vorrichtungsansprüche.

## Geänderte Patentansprüche

### Geänderte Patentansprüche gemäss Regel 86(2) EPÜ.

**1.** Verfahren zur Transformation von Management Informationen (MI) einer Management Information Base (MIB) eines TMN Systems, mit
- einer prädikativ formulierten Frage (necAlarm), betreffend die Management Information Base;
- einer Transformation Function (TF), umfassend:
■ ein in einer prädikativen Programmiersprache programmiertes prädikatives Programm (PP) zur Lösung der Frage;
■ einen Interpreter (PI) des prädikativen Programms;
mit folgenden Schritten:
(a) Transformation der Management Information (MI) in Fakten des prädikativen Programms;
(b) Lösung der Frage durch Analyse der Fakten mit dem durch den Interpreter ausgeführten prädikativen Programm.

**2.** Verfahren nach dem vorstehenden Anspruch,
bei dem der Interpreter ein in einer imperativen Programmiersprache programmiertes Build-In Prädikt (Solve ("varBind")) aufweißt, vom dem so auf die Management Information Base zugegriffen wird, dass deren Management Informationen wie Fakten des prädikativen Programms erscheinen.

**3.** Verfahren nach dem vorstehenden Anspruch,
bei dem die Fakten von dem prädikativen Programm mit Hilfe eines Backtracking Verfahrens analysiert werden.

**4.** Verfahren nach dem vorstehenden Ansprüche,
bei dem der Interpreter in einer imperativen Programmiersprache programmiert ist.

**5.** Verfahren nach einem der vorstehenden Verfahrensansprüche,
bei dem die Management Information Base zumindest vor deren erster Analyse von einem Netzelement (NE) geladen wird.

**6.** Erzeugnis - insbesondere Mediation Device (MD), Adaption Device (AD) oder Transformation Function (TF) eines TMN System -, umfassend Mittel, die zur Durchführung aller Schritte eines Verfahrens nach einem der vorstehenden Verfahrensansprüche eingerichtet sind.

**7.** Erzeugnis - insbesondere Interpreter (PI) -, umfassend Mittel, die zur Durchführung derjenigen Schritte eines Verfahrens nach einem der vorstehenden Verfahrensansprüche eingerichtet sind, die von dem Erzeugnis bewirkt werden, wobei zumindest ein weiteres Erzeugnis zur Durchführung der restlichen Schritte des Verfahrens eingerichtet ist und durch Zusammenwirkung der zumindest zwei Erzeugnisse alle Schritte des Verfahrens durchgeführt werden.

**8.** Erzeugnis nach einem der vorstehenden Erzeugnisansprüche, ausgebildet als Computerprogrammprodukt, dessen Programmcode von zumindest einem Prozessor ausgeführt wird.
